# EUROPÄISCHE PATENTSCHRIFT

(11) **EP 2 645 502 B1**
(45) Veröffentlichungstag und Bekanntmachung des Hinweises auf die Patenterteilung: **14.05.2014**
(21) Anmeldenummer: 12161655.1
(22) Anmeldetag: 28.03.2012
(51) Int. Cl.: H02G 3/08

(54) **Gehäuse für die Aufnahme eines Systemträgers für die Gebäude-Elektroinstallation und Kommunikationstechnik**
Housing for holding a system holder for electroinstallation technology for buildings and door communication technology
Boîtier pour la réception d'un support de système pour l'installation électrique du bâtiment et la technique de communication

(43) Veröffentlichungstag der Anmeldung: 02.10.2013
(60) Teilanmeldung: 13155339.8
(73) Patentinhaber: Gira Giersiepen GmbH & Co. Kg, 42477 Radevormwald (DE)
(72) Erfinder: Schieffer, Klaus, 51375 Leverkusen (DE)
(74) Vertreter: Patentanwälte Dr. Solf & Zapf

(56) Entgegenhaltungen:
- DE-A1- 3 926 062
- JP-A- 62 213 509
- US-A- 1 534 723
- US-A- 2 552 400

## Beschreibung

Die vorliegende Erfindung betrifft ein Gehäuse für die Aufnahme eines Systemträgers für Systemmodule für die Gebäude-Elektroinstallationstechnik und Türkommunikationstechnik, insbesondere für die Unterputzmontage, bestehend aus einem polygonförmigen Gehäuseboden mit einer diesen umfassenden Gehäusewandung und einer dem Gehäuseboden gegenüberliegenden Gehäuseöffnung, wobei Montageelemente und/oder Leitungsdurchführungen vorgesehen sind, wobei der Gehäuseboden und ein Teil der Gehäusewandung aus einem einstückigen Teil gebildet sind, das in seinem Eckbereich Montageöffnungen aufweist, die im Gehäuseboden und im Bereich der Gehäusewandung ausgebildet sind, die durch Eckformteile verschließbar sind, die einen Teil der Gehäusewandung und des Gehäusebodens bilden, und an denen die Montageelemente und Leitungsdurchführungen ausgebildet sind.

Ein derartiges Gehäuse ist aus der DE 39 26 062 A1 bekannt. Hierbei handelt es sich um eine Einbaudose für elektrische Installationsgeräte. Das einen Teil des Gehäusebodens und der Gehäusewandung bildende einteilige Bauteil ist als Kunststoffspritzgussbauteil ausgebildet. Um Gehäuse unterschiedlicher Baugröße zu bilden, ist es deshalb erforderlich, für jede Gehäusegröße angepasste Spritzgussformen herzustellen. Hierdurch würden sich aber erheblich Werkzeugkosten ergeben. Zudem besitzen die vorgesehenen Eckformteile dieselbe Breite wie der Gehäuseboden, so dass bei einer Veränderung der Gehäuseabmessungen auch eine Anpassung der Eckformteile erforderlich ist, wodurch weitere zusätzliche Werkzeugkosten zur Herstellung der angepassten Eckformteile anfallen würden. Somit ist das bekannte Gehäuse typischerweise nur für die Herstellung in einer bestimmten Baugröße, und zwar als Doppel-Einbaudose vorgesehen.

Bei Türkommunikationssystemen, die modular aufgebaut sind, ist es bekannt, für unerschiedlich große Anlagen individuell hergestellte Unterputzgehäuse aus Blech zu fertigen, an denen dann die einzelnen Funktionen, d. h. Funktionen für die Gehäusehalterung und/oder für die Leitungsverbindung bzw. -durchführung, speziell angebaut werden müssen. Dies erfordert einen hohen Fertigungsaufwand, zudem ergeben sich hohe Lagerkosten, da für jeden Anwendungsfall ein spezielles in der Größe angepasstes Unterputzgehäuse vorgehalten werden muss. Es ist ebenfalls bekannt, aus Kunststoff hergestellte Gehäuse in Standardgrößen herzustellen und diese mit Verbindungselementen zusammenzustecken, und zwar entsprechend der gewünschten Systemgröße. Hierbei bedarf es einer speziellen Ausbildung der Kabeldurchführungen zwischen den einzelnen Gehäusen. Zudem ergibt sich durch die Verbindung mehrerer Standardgehäusen zu einer größeren Einheit ein erhöhter Montageaufwand.

Der vorliegenden Erfindung liegt die Aufgabe zu Grunde, ein Gehäuse der eingangs beschriebenen Art derart zu verbessern, dass bei Bereitstellung einer großen Typenvielfalt hinsichtlich der Baugröße durch Verwendung von Gleichteilen und durch eine einfache Fertigungstechnik einerseits der Herstellungsaufwand und andererseits die Montagekosten reduziert werden können.

Erfindungsgemäß wird dies dadurch erreicht, dass das einstückige Teil als Stanzbiegeteil aus Metallblech gebildet ist, und das Stanzbiegeteil einen Gehäuseboden mit einer Rechteckform besitzt und zwei parallel verlaufende Längswandabschnitte aufweist, die den Gehäuseboden stirnseitig beidseitig mit einem Verbindungsabschnitt überragen, sowie zwischen den endseitigen Verbindungsabschnitten die Montageöffnung ausgebildet ist und durch jeweils ein Eckformteil mit einem rechteckigen Bodenabschnitt und einem U-förmigen Wandabschnitt verschließbar ist. Damit ist es erfindungsgemäß lediglich erforderlich, entsprechend der gewünschten Gehäusegröße entsprechende Stanzbiegeteile herzustellen, die dann in ihren durch die Montageöffnungen offenen Eckbereichen durch die Eckformteile verschließbar sind, wobei die Eckformteile vorgefertigt sind und lediglich entsprechend in Anpassung an die jeweilige Gehäusetiefe unterschiedlich ausgebildet werden müssen. Hierdurch ergibt sich eine wesentliche Fertigungsvereinfachung und Kostenreduzierung und darüber hinaus ein verringerter Aufwand an Lagerkosten. Zudem stellen die Eckformteile Funktionsteile dar, da an ihnen die für die Befestigung des Gehäuses im Mauerwerk und für die Leitungsdurchführung erforderlichen Elemente ausgebildet sind. Das gleiche gilt auch für die Halteelemente, die für die Montage des Systemträgers erforderlich sind. Erfindungsgemäß besteht zwischen dem jeweiligen Eckformteil und dem Stanzbiegeteil eine formübergreifende Verbindungstechnik, die vor eindringendem Schmutz und Feuchtigkeit schützt. Durch diese formübergreifende Verbindungstechnik ergibt sich eine geschlossene Nahtstelle gegen Schmutz und aus der Wand austretende Feuchtigkeit, in die das erfindungsgemäße Gehäuse eingebaut wird. Die erfindungsgemäßen Eckformteile können für ein Einbautiefen von 40 mm, 150 mm und 400 mm beispielsweise vorgesehen werden.

Vorzugsweise sind die Montageöffnungen in gleicher Form und Größe ausgebildet, so dass auch die Eckformteile entsprechend der Ausgestaltung der Montageöffnungen angepasst werden können. Die erfindungsgemäßen Eckformteile werden zweckmäßigerweise in Spritzgusstechnik hergestellt.

Vorteilhafte Ausführungen der Erfindung sind in den Unteransprüchen enthalten und werden anhand der in den beiliegenden Zeichnungen dargestellten Ausführungsbeispiele näher erläutert. Es zeigen:
- Fig. 1: eine perspektivische Frontalansicht in Explosionsdarstellung eines Gehäuses,
- Fig. 2: eine perspektivische Frontalansicht des Gehäuses gemäß Fig. 1 im zusammengesetzten Zustand,
- Fig. 3: eine perspektivische Frontalansicht in Explosionsdarstellung einer Ausführungsform eines erfindungsgemäßen Gehäuses und
- Fig. 4: das erfindungsgemäße Gehäuse gemäß Fig. 3 im zusammengesetzten Zustand.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Merkmalskombinationen und Rückbeziehungen der Ansprüche eine erfinderische Bedeutung haben.

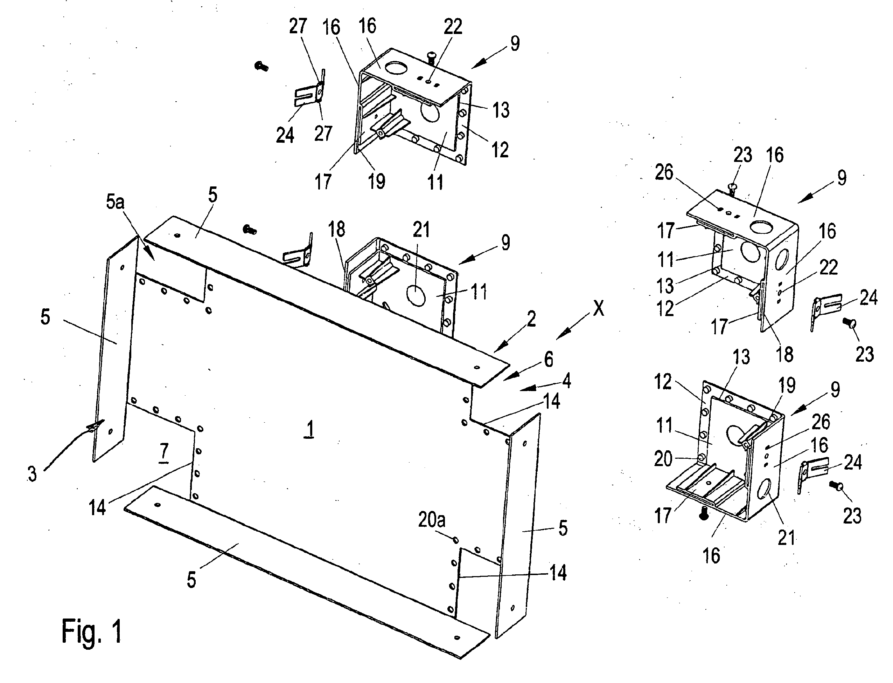

Wie sich aus Fig. 1 ergibt, wird ein Gehäuse aus einem Gehäuseboden 1 und aus einer diesen umfassenden Gehäuse- bzw. Umfangswandung 2 gebildet, wobei dem Gehäuseboden 1 gegenüberliegend eine Gehäuseöffnung 3 vorhanden ist, die ebenfalls von der Umfangswandung 2 eingeschlossen wird. Der Gehäuseboden 1 und die Umfangswandung 2 bestehen teilweise aus einem einstückigen Stanzbiegeteil 4, das aus einem Metallblech-Zuschnitt besteht. Der Gehäuseboden 1 besitzt im dargestellten Ausführungsbeispiel eine rechteckige Form. Die Gehäusewandung 2 weist an den Seitenkanten des Gehäusebodens 1 rechtwinklig abgebogene Wandabschnitte 5 auf. In seinen Eckbereichen 5a weist das Gehäuse jeweils eine Montageöffnung 6 auf, die beim Ausstanzen des das Stanzbiegeteil 4 bildenden Metallblechzuschnitts entsteht. Diese Montageöffnung 6 erstreckt sich sowohl in den Gehäuseboden 1 als auch in den Bereich der Umfangswandung 2, so dass in diesen Bereichen das Stanzbiegeteil offen ist. Der im Gehäuseboden 1 liegende Abschnitt der Montageöffnung 6 hat vorzugsweise eine quadratische Form. In die in dem vorliegenden Beispiel dargestellten vier Montageöffnungen 6 sind Eckformteile 9 einsetzbar, wodurch die Montageöffnungen 6 vollständig verschlossen werden. Somit bilden die Eckformteile 9 einen Teil der Umfangswandung bzw. Gehäusewandung 2 und des Gehäusebodens 1. Die Eckformteile 9 sind zweckmäßigerweise als Kunststoff-Spritzgussteile hergestellt. Weiterhin ist es von Vorteil, wenn die Montageöffnungen 6 in Form und Größe gleich ausgebildet sind, so dass auch die Eckformteile 9 entsprechend ihrer Größe in Anpassung an die Montageöffnungen 6 gleich ausgebildet sein können. Die Eckformteile 9 bestehen aus einem Bodenabschnitt 11, der der Form des Öffnungsabschnitts der Montageöffnung 6 im Gehäuseboden 1 derart angepasst ist, dass dieser Öffnungsabschnitt verschlossen wird und der Bodenabschnitt 11 mit einem an seinen freien Rändern vorhandenen Randbereich 12 den Gehäuseboden 1 überdeckt, so dass im montierten Zustand des Eckformteils 9 dieses mit dem Randbereich 12 auf dem Gehäuseboden 1 an seiner Außenseite aufliegt.

Der Randbereich 12 besitzt eine geringere Wandstärke als der übrige Bodenabschnitt 11, so dass sich eine Anlagestufe 13 ausbildet, gegen die der Öffnungsabschnitt der Montageöffnung 6 im Bereich des Gehäusebodens 1 mit seinem Öffnungsrand 14 im montierten Zustand anliegen kann. Das Eckformteil 9 weist zwei einen rechten Winkel einschließende Eckwandabschnitte 16 auf, die im montierten Zustand die Montageöffnung 6 im Bereich der Gehäusewandung 2 verschließen und somit einen Teil der Öffnungswandung bilden. Im montierten Zustand liegen die Eckwandabschnitte 16 mit ihren Endbereichen auf den Wandungsabschnitten 5 endseitig an deren Außenseite auf. Vorteilhafterweise sind die Eckwandabschnitte 16 bereichsweise doppelwandig ausgeführt, indem auf ihrer Innenseite ein Parallelwandabschnitt 17 derart angeformt ist, dass zwischen diesem und dem Eckwandabschnitt 16 ein Montagespalt 18 entsteht. Dieser Montagespalt 18 besitzt eine den freien Enden der Wandabschnitte 5 zugekehrte Einführöffnung 19. Der Parallelwandabschnitt 17 ist an seinen beiden Außenseiten mit dem jeweiligen Eckwandabschnitt 16 einstückig verbunden, so dass der Montagespalt 18 an seinem am Gehäuseboden 1 angrenzenden Ende und an seinem der Einführöffnung 19 gegenüberliegenden Ende verschlossen ist. Der Parallelwandabschnitt 17 springt mit seinem freien Ende vorzugsweise um die Breite des Randbereiches 12 gegenüber dem freien Ende des zugehörigen Eckwandabschnittes 16 zurück.

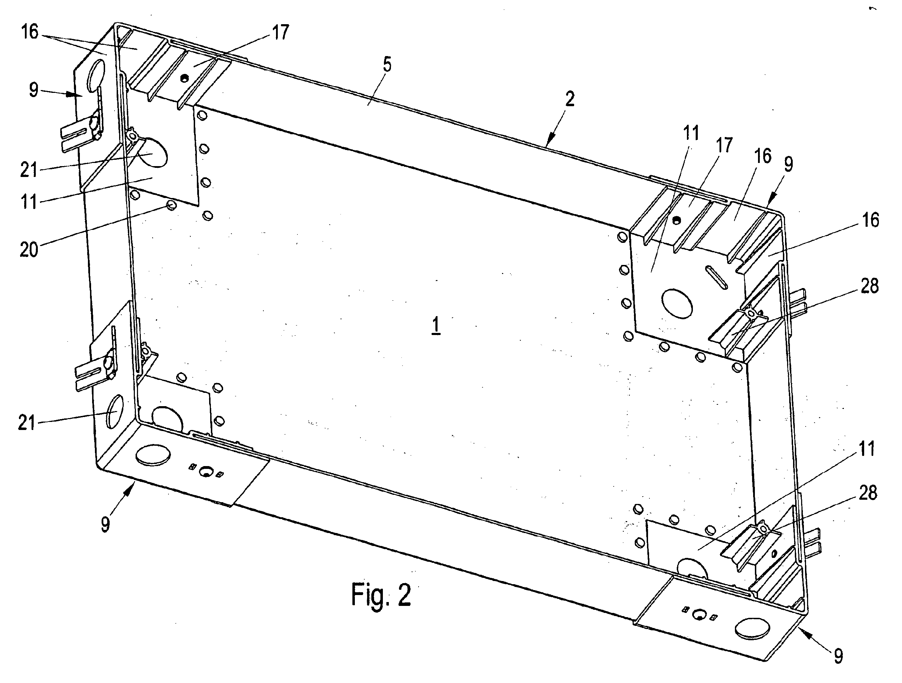

Der Montagespalt 18 dient zur Aufnahme der Endbereiche der Wandabschnitte 5, siehe Figur 2. Für die Montage der Eckformteile 9 werden diese in Pfeilrichtung X, siehe Figur 1, von der Rückseite des Gehäusebodens 1 aufgesteckt, indem die Wandabschnitte 5 mit ihren Endbereichen in den Montagespalt 18 eindringen. In der Montageendstellung, siehe Fig. 2, liegt der Bodenabschnitt 11 mit seinem Randbereich 12 am Gehäuseboden 1 an, und die Wandabschnitte 5 sind mit ihrem Endbereich vollständig innerhalb des Montagespaltes 18 aufgenommen. Der Montagespalt 18 besitzt eine derartige Spaltbreite, dass die Endbereiche der Bodenabschnitte 5 insbesondere klemmend gehalten werden. Durch diese Art der Montage ergibt sich eine geschlossene Nahtstelle, eine formübergreifende Ausbildung der Verbindung, so dass Schmutz und Wasser nicht von der Rückseite des Gehäusebodens 1 bzw. des Gehäuses eindringen können.

Weiterhin ist es zweckmäßig, wenn im Randbereich 12 Zapfen 20 angeformt sind, die im montierten Zustand durch Löcher 20a im Umfangsbereich der im Gehäuseboden 1 befindlichen Montageöffnung 6 hindurchragen. Durch thermisches Verschweißen bzw. Verstemmen der Zapfen 20 wird eine form- und kraftschlüssige Verbindung der Eckformteile 9 mit dem Stanzbiegeteil 4 bewirkt. Die Eckformteile 9 können aber auch durch Verklebung fest mit dem Stanzbiegeteil 4 verbunden werden.

Es ist vorgesehen, dass an den Eckformteilen 9 alle erforderlichen Montageelemente und Leitungsdurchführungen sowie Verschraubungslöcher angeformt und/oder anschließbar sind. Wie in den Figuren dargestellt, sind z. B. in dem Bodenabschnitt 11 und den Eckwandabschnitten 16 herausbrechbare Wanddurchführungen 21 zum Durchführung von Kabeleinführungen vorgesehen. Weiterhin befinden sich in den Eckwandabschnitten 16 ebenfalls herausbrechbare Verschraubungsbohrungen 22, in die Schrauben 23 z. B. zum Befestigen von Mauerankern 24 eingeschraubt werden können. Hierfür ist auch beidseitig der Verschraubungsbohrung 22 jeweils eine viereckige Wandvertiefung 26 ausgebildet, in die am Maueranker 24 vorhandene, im Querschnitt viereckige Fortsätze 27 als Verdrehsicherung eingreifen können. Auf seiner Innenseite weist der Bodenabschnitt 11 einen Montagefortsatz 28 auf, der eine Innenbohrung 29 besitzt. Dieser Montagefortsatz 28 dient z. B. zum Befestigen eines Systemträgers, der nicht dargestellt ist, zur Aufnahme von Systemmodulen für die Gebäudeinstallations- und Kommunikationstechnik. Dabei ist die Höhe der Montagefortsätze 28 insbesondere derart bemessen, dass der Systemträger bündig mit dem Rand der Umfangswandung 2 abschließen kann. Darüber hinaus kann auch eine derartige Dimensionierung erfolgen, dass ein Schließblech für den Verschluss des Systemträgers das Gehäuse im Bereich seiner Gehäuseöffnung 3 bündig verschließt. Die Montagefortsätze 28 sind im vorliegenden Beispiel beispielsweise sternförmig ausgebildet und besitzen somit abstehende Versteifungsrippen. Auch ist es zweckmäßig, wenn beispielsweise an der Innenseite der Parallelwandabschnitte 17 Versteifungsrippen ausgebildet sind. Erfindungsgemäß bilden somit die Eckformteile 9 eine Funktionsecke für das erfindungsgemäße Gehäuse, da durch die Funktionsecke alle wesentlichen Befestigungs- und Verbindungsfunktionen eines Gehäuses bewirkt werden können. Im dargestellten Ausführungsbeispiel sind die jeweils diagonal einander gegenüberliegenden Eckformtelle 9 baugleich ausgeführt, so dass für beliebig große Stanzbiegeteile 4 bei gleicher Bautiefe nur jeweils zwei unterschiedliche Typen der Eckformteile 9 bevorratet werden müssen. Grundsätzlich werden Bautiefen von 40 mm, 150 mm und 400 mm bevorzugt, so dass pro Bautiefe jeweils zwei Typen von Eckformteilen 9 vorgehalten werden müssen.

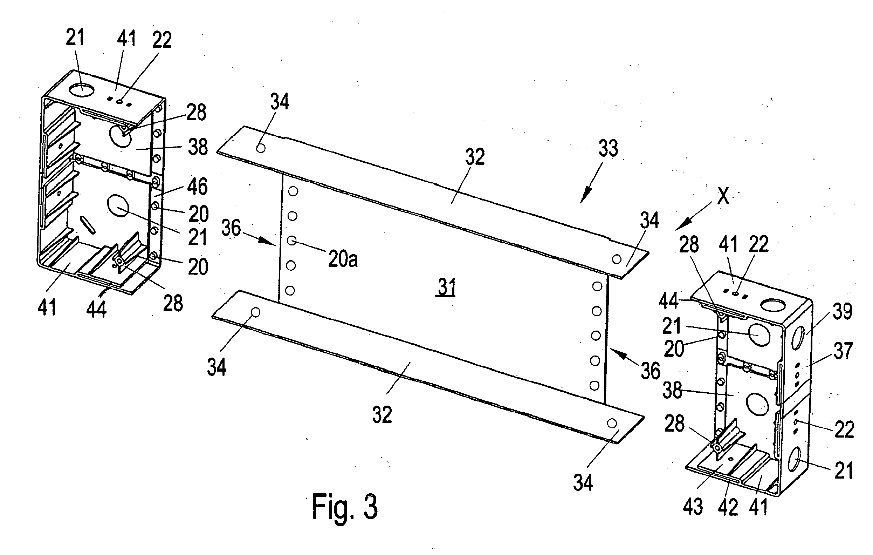

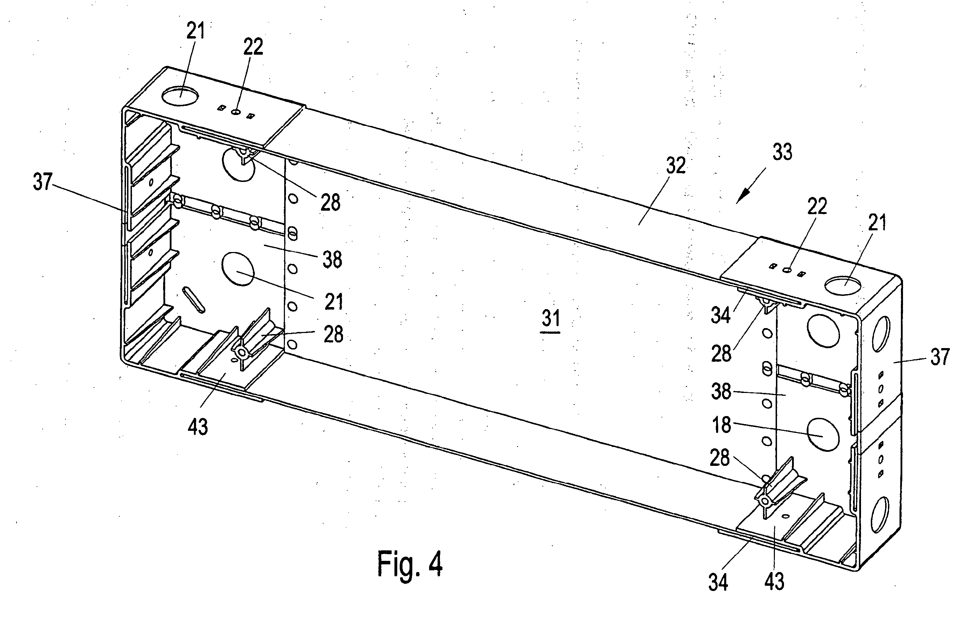

In den Figuren 3 und 4 ist eine Ausführung eines erfindungsgemäßen Gehäuses dargestellt. Dieses Gehäuse dient z. B. als einspaltiges Unterputzgehäuse, so dass in diesem Gehäuse nur eine Spalte von Systemmodulen hintereinander befestigt werden kann. Dieses Gehäuse besitzt einen rechteckigen Gehäuseboden 31 und zwei parallel zueinander an seinen Längsseiten verlaufende Wandabschnitte 32, die rechtwinklig abgebogen sind, die mit dem Gehäuseboden 31 ein einstückiges Stanzbiegeteil 33 bilden. Die Längswandabschnitte 32 überragen den Gehäuseboden 31 stirnseitig beidseitig mit einem Verbindungsabschnitt 34. Im stirnseitigen Bereich des Gehäusebodens 31 und der Längswandabschnitte 32 befindet sich eine Montageöffnung 36, die sich über die gesamte Breite des Gehäusebodens 31 erstreckt. Dabei befinden sich ein Teil der Montageöffnung 36 im Bereich des Gehäusebodens 31 und ein anderer Teil im Bereich der Gehäusewandung, d. h. zwischen den Längswandabschnitten 32. Die Montageöffnung 36 wird durch jeweils ein Eckformteil 37 verschlossen, das mit dem Stanzbiegeteil 33 form- und kraftschlüssig verbindbar ist. Das Eckformteil 37 besteht aus einem rechteckigen Bodenabschnitt 38, der von einem U-förmigen Wandabschnitt 39 eingefasst ist. Der U-förmige Wandabschnitt 39 ist an seinen endseitigen U-Schenkeln 41 teilweise doppelwandig ausgeführt, so dass ein Montagespalt 42 zwischen einem innenseitigen Parallelwandabschnitt 43. und dem jeweiligen U-Schenkel 41 entsteht. Der Parallelwandabschnitt 43 ist an seinem innenliegenden Ende, das einer Einführöffnung 44 des Montagespaltes 42 gegenüberliegt, an seinem dem Bodenabschnitt 38 endenden Wandbereich verschlossen durch eine einstückige Verbindung, so dass im eingesteckten Zustand der Verbindungsabschnitt 34 im Montagespalt 42 nach außen hin und auf der Innenseite des Gehäuses verschlossen ist, so dass ein Feuchtigkeitsschutz und Schmutzschutz erzielt wird. Zwischen den Verbindungsabschnitten 34 und dem Eckformteil 37 besteht im Montagespalt 42 vorzugsweise ein Klemmsitz. Der Pfeil X in Fig. 3 gibt die Montagerichtung der Eckformteile wieder.

An den Eckformteilen 37 sind - wie zu dem Ausführungsbeispiel gemäß Fig. 1 und 2 beschrieben - herausbrechbare Wanddurchführungen 21 und Verschraubungsbohrungen 22 für Schrauben 23 zum Befestigen von Mauerankern 24 sowie viereckige Wandvertiefungen 26 sowie Montagefortsätze 28 ausgebildet. Jedoch sind an jedem Bodenabschnitt 38 zwei gegenüberliegende Montagefortsätze 28 vorhanden. Hierdurch sind die Eckformteile 37 in Form und Größe und Aufbau gleich, so dass nur ein einziges Eckformteil 37 hergestellt und bevorratet werden muss. Das Stanzbiegeteil 33 kann in unterschiedlichen Längen individuell hergestellt werden.

Wie ebenfalls in den Figuren 1 und 2 beschrieben ist, befindet sich im Randbereich 46 entsprechend dem Randbereich 12 in Figur 1 und 2 Zapfen 20, die im aufgesteckten Zustand die Öffnungen 20a durchragen und mit dem Gehäuseboden 31 thermisch verstemmt bzw. verschweißt sind. Hier ist ebenfalls eine Verklebung der Bauteile miteinander möglich.

Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben.

## Patentansprüche

1. Gehäuse für die Aufnahme eines Systemträgers für Systemmodule für die Gebäude-Elektroinstallationstechnik und Türkommunikationstechnik, insbesondere für die Unterputzmontage, bestehend aus einem polygonförmigen Gehäuseboden (31) mit einer diesen umfassenden Gehäusewandung (32) und einer dem Gehäuseboden (31) gegenüberliegenden Gehäuseöffnung (3), wobei Montageelemente (22, 28) und/oder Leitungsdurchführungen (21) vorgesehen sind, wobei der Gehäuseboden (31) und ein Teil der Gehäusewandung (32) aus einem einstückigen Teil gebildet sind, das in seinen Eckbereichen Montageöffnungen (36) aufweist, die im Gehäuseboden (31) und im Bereich der Gehäusewandung (32) ausgebildet sind, die durch Eckformteile (37) verschließbar sind, die einen Teil der Gehäusewandung (32) und des Gehäusebodens (31) bilden, und an denen die Montageelemente (28) und Leitungsdurchführungen (21) ausgebildet sind,
**dadurch gekennzeichnet, dass** das einstückige Teil als Stanzbiegeteil (33) aus Metallblech gebildet ist, und das Stanzbiegeteil (33) einen Gehäuseboden (31) mit einer Rechteckform besitzt und zwei parallel verlaufende Längswandabschnitte (32) aufweist, die den Gehäuseboden (31) stirnseitig beidseitig mit einem Verbindungsabschnitt (34) überragen, wobei zwischen den endseitigen Verbindungsabschnitten (34) die Montageöffnung (36) ausgebildet ist und durch jeweils ein Eckformteil (37) mit einem rechteckigen Bodenabschnitt (38) und einem U-förmigen Wandabschnitt (39) verschließbar ist.

2. Gehäuse nach Anspruch 1,
**dadurch gekennzeichnet, dass** die Montageöffnungen (36) die gleiche Form und Größe besitzen.

3. Gehäuse nach Anspruch 1 oder 2,
**dadurch gekennzeichnet, dass** die Eckformteile (37) an ihren mit den Wandabschnitten (32) des Stanzbiegeteils (33) verbundenen Wandabschnitten (41) doppelwandig unter Ausbildung eines Montagespaltes (42) zur Aufnahme der Wandabschnitte (32) durch eine Einführungsöffnung (44) geformt sind.

4. Gehäuse nach Anspruch 3,
**dadurch gekennzeichnet, dass** der Montagespalt (42) zwischen den inneren Parallelwandabschnitten (43) und den Wandabschnitten (41) derart ausgebildet ist, dass der Montagespalt (42) im Bereich des Gehäusebodens (31) und an seinem der Einführungsöffnung (44) gegenüberliegenden Ende verschlossen ist.

5. Gehäuse nach einem der Ansprüche 1 bis 4,
**dadurch gekennzeichnet, dass** die Eckformteile (37) mit dem Stanzbiegeteil (33) im Bereich des Gehäusebodens (31) über thermische Nietstemm- bzw. Schweißverbindungen (20, 20a) oder Klebeverbindungen verbunden sind.

6. Gehäuse nach einem der Ansprüche 1 bis 5,
**dadurch gekennzeichnet, dass** an jedem Eckformteil (37) ein Montagefortsatz (28) ausgebildet ist, wobei an jedem Bodenabschnitt (38) zwei gegenüberliegende Montagefortsätze (28) vorhanden sind, so dass die Eckformteile (37) in Form, Größe und Aufbau gleich sind.

7. Gehäuse nach einem der Ansprüche 1 bis 6,
**dadurch gekennzeichnet, dass** innerhalb des Montagespaltes (42) ein Klemmsitz besteht.

8. Gehäuse nach einem der Ansprüche 1 bis 7,
**dadurch gekennzeichnet, dass** die Eckformteile (37) als Kunststoff-Spritzgussteile ausgebildet sind.

## Claims

1. A housing for receiving a system holder for system modules for buildings electrical installation technology and door communication technology, in particular for concealed mounting, consisting of a polygonal housing base (31) with a housing wall (32) encompassing it and a housing opening (3) located opposite the housing base (31), wherein mounting elements (22, 28) and/or cable lead-throughs (21) are provided, wherein the housing base (31) and part of the housing wall (32) are formed from a one-piece part which has mounting openings (36) in its corner regions which are formed in the housing base (31) and in the region of the housing wall (32) and which can be closed by shaped corner parts (37) which form part of the housing wall (32) and the housing base (31), and on which the mounting elements (28) and cable lead-throughs (21) are formed,
**characterised in that** the one-piece part is formed as a stamped and bent part (33) made of metal sheet, and the stamped and bent part (33) has a housing base (31) with a rectangular shape and has two longitudinal wall sections (32) extending in parallel which project over the housing base (31) on the end face on both sides with a connection section (34), the mounting opening (36) being formed between the connection sections (34) on the end face and being able to be closed by in each case a shaped corner part (37) with a rectangular base section (38) and a U-shaped wall section (39).

2. A housing according to Claim 1, **characterised in that** the mounting openings (36) are of the same shape and size.

3. A housing according to Claim 1 or 2, **characterised in that** the shaped corner parts (37) on their wall sections (41) which are connected to the wall sections (32) of the stamped and bent part (33) are formed double-walled, forming a mounting gap (42) for receiving the wall sections (32) through an introduction opening (44).

4. A housing according to Claim 3, **characterised in that** the mounting gap (42) is formed between the inner parallel wall sections (43) and the wall sections (41) such that the mounting gap (42) is closed in the region of the housing base (31) and on its end located opposite the introduction opening (44).

5. A housing according to one of Claims 1 to 4, **characterised in that** the shaped corner parts (37) are connected to the stamped and bent part (33) in the region of the housing base (31) via thermal pressed rivet joints or welded joints (20, 20a) or adhesive joints.

6. A housing according to one of Claims 1 to 5, **characterised in that** a mounting extension (28) is formed on each shaped corner part (37), with two opposing mounting extensions (28) being present on each base section (38), so that the shaped corner parts (37) are identical in shape, size and construction.

7. A housing according to one of Claims 1 to 6, **characterised in that** there is a clamping seat within the mounting gap (42).

8. A housing according to one of Claims 1 to 7, **characterised in that** the shaped corner parts (37) are formed as injection-moulded plastics-material parts.

## Revendications

1. Boîtier pour la réception d'un support de système pour des modules de système destiné à la technique d'installation électrique de bâtiments et la technique de communication de porte, en particulier pour le montage encastré, composé d'un fond de boîtier (31) de forme polygonale avec des parois de boîtier (32) entourant ce dernier et une ouverture de boîtier (3) placée en regard du fond de boîtier (31), dans lequel des éléments de montage (22, 28) et/ou des passages de câbles (21) sont prévus, le fond de boîtier (31) et une partie des parois de boîtier (32) étant formés d'une pièce d'un seul tenant qui comprend dans les zones de ses coins des ouvertures de montage (36) qui sont formées dans le fond de boîtier (31) et au niveau des parois de boîtier (32), qui peuvent être fermées par des pièces en forme de coin (37), qui forment une partie des parois de boîtier (32) et du fond de boîtier (31) et sur lesquelles sont formés les éléments de montage (28) et les passages de câbles (21),
**caractérisé en ce que** la pièce d'un seul tenant est formée d'une pièce découpée et cintrée (33) à partir d'une plaque métallique et la pièce découpée et cintrée (33) possède un fond de boîtier (31) ayant une forme rectangulaire et comprend deux secteurs de paroi latérale (32) disposés parallèles qui font saillie de chaque côté sur la face du fond de boîtier (31) avec un secteur d'assemblage (34), l'ouverture de montage (36) étant formée entre les secteurs d'assemblage (34) disposés aux extrémités et pouvant être fermée respectivement par une pièce en forme de coin (37) avec un secteur de fond (38) rectangulaire et un secteur de paroi (39) en forme de U.

2. Boîtier selon la revendication 1,
**caractérisé en ce que** les ouvertures de montage (36) présentent la même forme et la même taille.

3. Boîtier selon la revendication 1 ou 2,
**caractérisé en ce que** les pièces en forme de coin (37) forment au niveau de leurs secteurs de paroi (41) assemblés avec les secteurs de paroi (32) de la pièce découpée et cintrée (33) une double paroi qui forme par une ouverture d'insertion (44) un intervalle de montage (42) destiné à la réception des secteurs de paroi (32).

4. Boîtier selon la revendication 3,
**caractérisé en ce que** l'intervalle de montage (42) est formé entre les secteurs de paroi parallèles (43) internes et les secteurs de paroi (41) de telle manière que l'intervalle de montage (42) est fermé dans la zone du fond de boîtier (31) et à son extrémité en regard de l'ouverture d'insertion (44).

5. Boîtier selon l'une quelconque des revendications 1 à 4,
**caractérisé en ce que** les pièces en forme de coin (37) sont assemblées avec la pièce découpée et cintrée (33) dans la zone du fond de boîtier (31) par le biais d'assemblages thermiques avec rivets ou avec soudures (20, 20a) ou d'assemblages par collages.

6. Boîtier selon l'une quelconque des revendications 1 à 5,
**caractérisé en ce qu'**une protubérance de montage (28) est formée sur chaque pièce en forme de coin (37), dans lequel deux protubérances de montage (28) sont présentes sur chaque secteur de fond (38) de telle sorte que les pièces en forme de coin (37) ont la même forme, la même taille et la même structure.

7. Boîtier selon l'une quelconque des revendications précédentes 1 à 6,
**caractérisé en ce qu'**un moyen de serrage est présent à l'intérieur de l'intervalle de montage (42).

8. Boîtier selon l'une quelconque des revendications 1 à 7,
**caractérisé en ce que** les pièces en forme de coin (37) sont réalisée sous la forme de pièces en matière synthétique moulées par injection.
